# EUROPÄISCHE PATENTSCHRIFT

(11) **EP 4 027 101 B1**
(45) Veröffentlichungstag und Bekanntmachung des Hinweises auf die Patenterteilung: **01.01.2025**
(21) Anmeldenummer: 21212363.2
(22) Anmeldetag: 03.12.2021
(51) Int. Cl.: F41G 11/00, G02B 23/16, G03B 17/56, G03B 17/48, F41G 1/38

(54) **ADAPTERVORRICHTUNG ZUR BEFESTIGUNG EINES VORSATZGERÄTS AN EINEM ZIELFERNROHR**
ADAPTER DEVICE FOR ATTACHING AN ATTACHMENT TO A TELESCOPIC SIGHT
DISPOSITIF ADAPTATEUR DESTINÉ À LA FIXATION D'UN APPAREIL ACCESSOIRE À UNE LUNETTE DE VISÉE

(30) Priorität: 11.01.2021 DE 102021200186
(43) Veröffentlichungstag der Anmeldung: 13.07.2022
(73) Patentinhaber: EP Arms GmbH, 90552 Röthenbach an der Pegnitz (DE)
(72) Erfinder: ENGELBREIT, Philipp, 91207 Lauf an der Pegnitz (DE)
(74) Vertreter: FDST Patentanwälte

(56) Entgegenhaltungen:
- WO-A1-99/27318
- DE-U1- 202019 106 729
- DE-U1- 202020 005 036
- US-A- 5 444 507
- US-A1- 2005 062 873

## Beschreibung

Die Erfindung betrifft eine Adaptervorrichtung zur Befestigung eines Vorsatzgeräts an einem Zielfernrohr.

Ein Zielfernrohr ist eine fernoptische Einrichtung, welche als eine Primäroptik beispielsweise an einer Schusswaffe montierbar ist. Ein solches Zielfernrohr dient einer optischen Vergrößerung von durch dieses in der Ferne betrachteten Objekten. Hierfür weist das Zielfernrohr einen Tubus mit einem objektseitigen Objektiv und mit einem benutzer- oder augenseitigen Okular auf. Zwischen dem Objektiv und dem Okular ist ein optischer Kanal gebildet, in welchem beispielsweise mehrere optische, insbesondere optisch vergrößernde, Elemente, zum Beispiel Linsen und/oder Prismen, angeordnet sind. In dem optischen Kanal befindet sich typischerweise weiterhin ein Absehen, also eine Zielmarkierung.

Um bei eingeschränkten oder schlechten Lichtverhältnissen ein zuverlässiges Zielen zu ermöglichen, werden beispielsweise sogenannte Vorsatz- oder Aufsatzgeräte, beispielsweise in Form von Nachtsichtgeräten oder Wärmebildgeräten, eingesetzt, welche vor dem Objektiv des Zielfernrohrs angeordnet werden. Bei einem solchen Vorsatzgerät wird mit dem Zielfernrohr auf ein von dem Vorsatzgerät erzeugtes Bild gezielt. Mit anderen Worten ist das Absehen auf ein Bild ausgerichtet. Dadurch ist es notwendig, dass ein solches Vorsatzgerät möglichst fluchtend mit dem Zielfernrohr angeordnet wird. Dies bedeutet, dass die optischen Achsen oder Kanäle des Zielfernrohrs und des Vorsatzgeräts möglichst versatzfrei aufeinander ausgerichtet sein sollten.

Typischerweise berühren sich das Vorsatzgerät und das Zielfernrohr beziehungsweise das Objektiv nicht. Hintergrund ist, dass das Vorsatzgerät ein vergleichsweise hohes Baugewicht, beispielsweise zwischen 300 g (Gramm) und 800 g, aufweist, und bei einer Schussabgabe der Schusswaffe durch den Hochschlag einer starken Belastung ausgesetzt ist. Insbesondere ist hierbei eine gleichbleibende, festen Fixierung des Vorsatzgeräts gewünscht, so dass nach einer Schussabgabe kein Versatz zwischen den optischen Achsen auftritt.

Das Vorsatzgerät kann hierbei beispielsweise mittels einer Montageschiene vor das Zielfernrohr montiert werden. Die Montageschiene ist hierbei insbesondere an der Schusswaffe befestigt.

Ebenso denkbar ist beispielsweise der Einsatz von Adaptervorrichtungen als Montageadapter, welche als mechanische Schnittstelle zwischen dem Zielfernrohr und dem Vorsatzgerät angeordnet sind. Beispielsweise sind als Klemmringe ausgeführte Adaptervorrichtungen mit einem Schnellverschluss oder Schnellspanner möglich, welche einerseits an einem objektivseitigen Tubusende des Zielfernrohrs und anderseits and dem Vorsatzgerät klemmbefestigbar sind. Das Vorsatzgerät ist somit über die Adaptervorrichtung mittelbar an dem Zielfernrohr befestigt, und wird somit von dem Zielfernrohr getragen.

In der WO 99/27318 A1 ist eine Vorrichtung zum Umrüsten einer optischen Vorrichtung für den Nachtgebrauch beschrieben. Die Vorrichtung weist hierbei ein Gehäuse, einen Klemmmechanismus, der mit dem Gehäuse gekoppelt ist und mit einem Ende der optischen Vorrichtung klemmend in Eingriff kommen kann, und ein Bildverstärkungsinstrument auf, das in dem Gehäuse angeordnet und so eingerichtet ist, dass, wenn das Gehäuse durch den Klemmmechanismus mit der optischen Vorrichtung gekoppelt ist, Licht durch die optische Vorrichtung in das Bildverstärkungsinstrument übertragen wird.

Die DE 20 2020 005 036 U1 offenbart einen Schnellmontageadapter für eine wiederholgenau reproduzierbare Montage von Nach- und Vorsatzanbauten an Zieloptiken. Der Schnellmontageadapter weist eine rohrkörperähnlich ausgestaltete Geometrie auf, welche aus mindestens zwei miteinander korrespondierenden Elementen besteht, welche, durch Einschwenken, mittels hintergreifender und formschlüssig wirkender Geometrien und/oder Verbindungselemente, welche den Elementen anhaften und/oder verstellbar mit den Elementen korrespondieren, eine Verbindung eingehen.

Aus der DE 20 2019 106 729 U1 ist ein optoelektronisches Gerät zur Verwendung als Monokular und als Vorsatzgerät für optische Einrichtungen bekannt, bei welcher eine Steuereinheit automatisch eine Umschaltung zwischen zwei Anzeigemodi auslöst, wenn von einem Sensorelement eine Rückmeldung gegeben wird, dass das optoelektronische Gerät nicht mehr mit einer optischen Einrichtung verbunden ist.

Der Erfindung liegt die Aufgabe zugrunde, einen besonders geeigneten Adapter zur Befestigung eines optische Vorsatzgeräts an einem Zielfernrohr anzugeben. Insbesondere soll eine möglichst wiederholgenaue exakte Halterung oder Befestigung des Vorsatzgeräts zum Zentrum des Zielfernrohrs (optischen Achse) ermöglicht werden.

Die Aufgabe wird erfindungsgemäß gelöst mit den Merkmalen des Anspruchs 1. Vorteilhafte Ausgestaltungen und Weiterbildungen sind Gegenstand der Unteransprüche.

Die erfindungsgemäße Adaptervorrichtung ist zur Befestigung eines Vorsatzgeräts an einem Zielfernrohr vorgesehen, sowie dafür geeignet und eingerichtet. Bei dem Zielfernrohr handelt es sich vorzugsweise um ein an einer Schusswaffe, insbesondere an einer handgeführten Schusswaffe, wie beispielsweise einem Jagdgewehr, befestigtes oder montiertes Zielfernrohr. Das Vorsatz- oder Aufsatzgerät ist beispielsweise als ein Wärmebild- oder Nachtsichtgerät ausgebildet.

Die Adaptervorrichtung weist hierbei einen an dem Zielfernrohr befestigten oder befestigbaren Klemmring auf, wobei der Klemmring eine Haltekontur zur lösbaren form- und/oder kraftschlüssigen Befestigung, Arretierung, Verrastung oder Verriegelung mit einer an dem Vorsatzgerät angeordneten oder anordenbaren Gegenkontur aufweist.

Die Konjunktion "und/oder" ist hier und im Folgenden derart zu verstehen, dass die mittels dieser Konjunktion verknüpften Merkmale sowohl gemeinsam als auch als Alternativen zueinander ausgebildet sein können.

Unter einem "Formschluss" oder einer "formschlüssigen Verbindung" zwischen wenigstens zwei miteinander verbundenen Teilen wird hier und im Folgenden insbesondere verstanden, dass der Zusammenhalt der miteinander verbundenen Teile zumindest in einer Richtung durch ein unmittelbares Ineinandergreifen von Konturen der Teile selbst oder durch ein mittelbares Ineinandergreifen über ein zusätzliches Verbindungsteil erfolgt. Das "Sperren" einer gegenseitigen Bewegung in dieser Richtung erfolgt also formbedingt.

Unter einem "Kraftschluss" oder einer "kraftschlüssigen Verbindung" zwischen wenigstens zwei miteinander verbundenen Teilen wird hier und im Folgenden insbesondere verstanden, dass die miteinander verbundenen Teile aufgrund einer zwischen ihnen wirkenden Reibkraft gegen ein Abgleiten aneinander gehindert sind. Fehlt eine diese Reibkraft hervorrufende "Verbindungskraft" (dies bedeutet diejenige Kraft, welche die Teile gegeneinander drückt, beispielsweise eine Schraubenkraft oder die Gewichtskraft selbst), kann die kraftschlüssige Verbindung nicht aufrecht erhalten und somit gelöst werden.

Durch die Adaptervorrichtung ist somit eine zerstörungsfreie und wiederholgenaue Befestigung des Vorsatzgeräts am Zielfernrohr ermöglicht. Insbesondere ist es möglich die optischen Achsen von Zielfernrohr und Vorsatzgerät reproduzierbar möglichst versatzfrei zueinander anzuordnen. Mit anderen Worten ermöglicht die Adaptervorrichtung eine wiederholgenaue präzise Ausrichtung des Sehfeldes des Vorsatzgerätes mit dem Mittelpunkt des Sehfeldes des Zielfernrohrs, so dass stets eine optimale Beobachtungsposition realisiert wird. Dadurch ist eine besonders geeignete Adaptervorrichtung realisiert.

Die Haltekontur und Gegenkontur können hierbei - ohne Beschränkung der Allgemeinheit - beispielsweise als eine Gewindeverbindung, eine Bajonettverbindung, oder als eine Schwertverriegelung ausgeführt sein. Wesentlich ist, dass eine zerstörungsfrei lösbare, form- und/oder kraftschlüssige, Fügeverbindung realisierbar ist.

Unter "axial" oder einer "Axialrichtung" wird hier und im Folgenden insbesondere eine Richtung parallel (koaxial) zur optischen Achse beziehungsweise entlang einer Längsrichtung des Zielfernrohrs, also senkrecht zu den Stirnseiten des etwa zylindrischen Tubus verstanden. Entsprechend wird hier und im Folgenden unter "radial" oder einer "Radialrichtung" insbesondere eine senkrecht (quer) zur optischen Achse des Zielfernrohrs orientierte Richtung entlang eines Radius des Zielfernrohrs oder Tubus verstanden. Unter "tangential" oder einer "Tangentialrichtung" wird hier und im Folgenden insbesondere eine Richtung entlang des Umfangs des Zielfernrohrs oder Tubus (Umfangsrichtung, Azimutalrichtung), also eine Richtung senkrecht zur Axialrichtung und zur Radialrichtung, verstanden.

Die Adaptervorrichtung kann hierbei beispielsweise als ein spezieller Montageadapter ausgeführt sein, dessen Haltekontur an eine vorgegebene Gegenkontur des Vorsatzgeräts angepasst ist. In einer erfindungsgemäßen Ausführung weist die Adaptervorrichtung jedoch einen an dem Vorsatzgerät befestigbaren Haltering auf, welcher mit der Gegenkontur versehen ist. Der Haltering kann hierbei für verschiedenste Vorsatzgeräte hergestellt werden. Der Haltering ist hierbei an eine jeweilige Verriegelungsart des Vorsatzgeräts angepasst. Beispielsweise weist der Haltering einen an ein Befestigungsgewinde des Vorsatzgeräts Gewindedurchmesser auf. Dadurch ist es möglich das Vorsatzgerät mittels des Halterings für eine Befestigung an dem Klemmring nachzurüsten, der Haltering wirkt somit quasi als ein Adapterring für die Adaptervorrichtung. Insbesondere ist es somit möglich ohne einen Wechsel oder Austausch des Halterings das Vorsatzgerät an verschiedensten Zielfernrohren zu montieren, wobei ein erneutes Einschießen nicht notwendig ist.

In einer denkbaren Weiterbildung weist der Klemmring zwei schellenartig gegeneinander verspannbare Ringhälften oder Halbschalen auf. Die Ringhälften umgreifen hierbei ein objektivseitiges Tubusende des Zielfernrohrs, welches im verspannten oder montierten Zustand form- und kraftschlüssig von dem Klemmring tangential und radial geklemmt ist. Dadurch ist eine einfache und zerstörungsfrei lösbare Befestigung des Klemmrings an dem Zielfernrohr ermöglicht.

In einer denkbaren Ausgestaltung sind die Ringhälften beispielsweise mittels zweier etwa diametral gegenüberliegender Befestigungsschrauben gegeneinander verspannbar. Beispielsweise weisen die Ringhälften hierbei jeweils zwei diametral gegenüberliegende Flanschbereiche mit einer (Gewinde-)Bohrung auf, wobei die Flanschbereiche der Ringhälften übereinander fluchtend angeordnet werden. Dadurch ist eine einfache und aufwandreduzierte Klemmbefestigung an dem Zielfernrohr realisiert.

Der Klemmring wird somit mittels zweier Befestigungsschrauben über eine Flächenpressung der Ringhälften an dem Zielfernrohr montiert. Dadurch ist weiterhin eine einfache Anpassung des Klemmrings an Zielfernrohre mit unterschiedlichem (Tubus-)Durchmessern möglich. In einer besonders vorteilhaften Ausbildung weisen die Ringhälften beziehungsweise die Flächenpressung eine Spann- oder Anlagefläche mit einer axialen Breite von weniger als 20 mm (Millimeter), insbesondere weniger als 17 mm, vorzugsweise etwa 15 mm, auf. Mit anderen Worten wird beispielsweise lediglich eine Spannfläche mit 15 mm Breite benötigt. Dies hat zur Folge, dass ebenso kombinierte Waffen wie ein Drilling oder eine Bockbüchsflinte mit einem Vorsatzgerät verwendet werden können.

Gemäß der Erfindung ist vorgesehen, dass die Haltekontur des Klemmrings und die Gegenkontur des Halterings als eine Gewindeverbindung ausgeführt sind. Beispielsweise ist die Haltekontur hierbei als ein Außengewinde und die Gegenkontur als ein korrespondierendes Innengewinde ausgeführt.

Vorzugsweise sind die Haltekontur und die Gegenkontur derart ausgeführt sind, dass sie über eine Drehbewegung, insbesondere mittels einer 45°-Drehbewegung, der Gegenkontur beziehungsweise des Halterings miteinander fügbar sind. Hierzu sind die Haltekontur und die Gegenkontur in der erfindungsgemäßen Ausführung als unterbrochene Rundgewinde ausgeführt. Geeigneterweise ist hierbei eine Feinzentrierung, beispielsweise am Klemmring vorgesehen, welche als Passungsdurchmesser eine Fläche im Gewindespiel abfängt, so dass durch die Plananlage der Konturen und der Feinzentrierung eine Wiederholgenauigkeit von beispielsweise ± 0.05 mm gewährleistet ist.

In einer zweckmäßigen Weiterbildung weist die Adaptervorrichtung ein einstellbares Verriegelungselement, beispielsweise einen betätigbaren Verriegelungsstift auf, welches(r) eine relative Bewegung der Konturen blockiert. Der Verriegelungsstift ist hierbei beispielsweise an dem Klemmring und/oder an dem Haltering angeordnet. Bei der erfindungsgemäßen Ausführung der Konturen als unterbrochene Rundgewinde greift der Verriegelungsstift hierbei beispielsweise in einen durch die Unterbrechungen gebildeten Zwischenraum ein. Damit ist eine stets gleichbleibende Position (Rotation) bei der Befestigung des Vorsatzgeräts an dem Klemmring sichergestellt. Beispielsweise weist der Haltering einen Verriegelungsstift auf der durch drücken eines Hebels entriegelt wird.

In einer alternativen, nicht erfindungsgemäßen, Ausgestaltung sind die Haltekontur und die Gegenkontur nach Art einer Bajonett-Verbindung ausgeführt. In einer denkbaren Ausführung ist die Haltekontur hierbei als zwei emporstehende Stifte ausgeführt, welche an diametral gegenüberliegenden Stellen des Klemmrings radial nach innen gerichtet sind, und wobei die Gegenkontur als zwei radiale Schrägnuten ausgeführt ist. Dadurch ist eine besonders kurze Bauform der Adaptervorrichtung realisiert.

Nachfolgend sind Ausführungsbeispiele der Erfindung anhand einer Zeichnung näher erläutert. Darin zeigen:
- Fig. 1: in perspektivischer Darstellung ein Zielfernrohr mit einer Adaptervorrichtung mit einem Haltering und mit einem Klemmring,
- Fig. 2, Fig. 3: in perspektivischen Darstellungen eine Adaptervorrichtung in einer zweiten Ausführungsform
- Fig. 4: in Schnittansicht die Adaptervorrichtung gemäß der zweiten Ausführungsform, und
- Fig. 5, Fig. 6: in perspektivischen Darstellungen eine dritte, nicht erfindungsgemäße, Ausführungsform der Adaptervorrichtung.

Einander entsprechende Teile und Größen sind in allen Figuren stets mit den gleichen Bezugszeichen versehen.

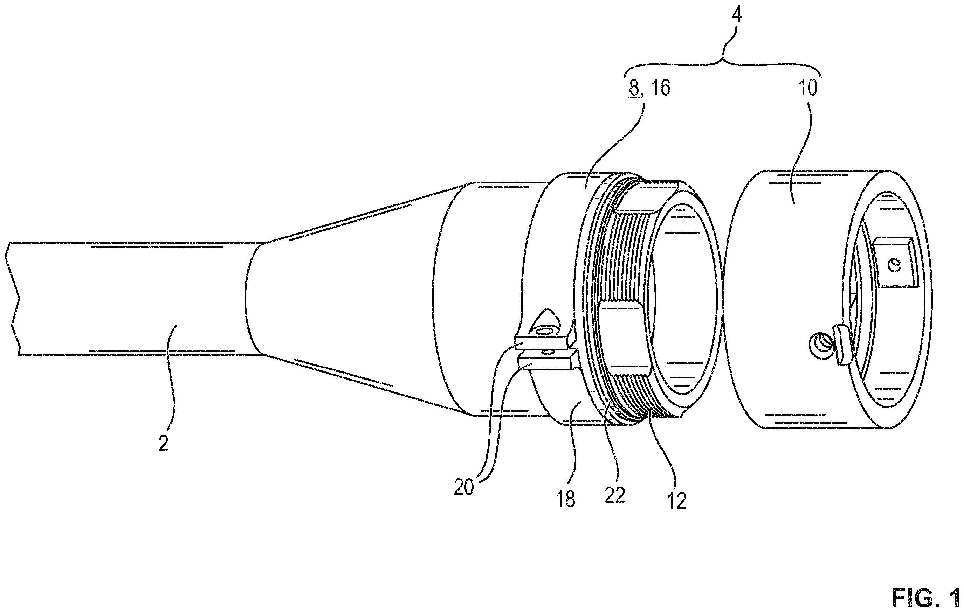

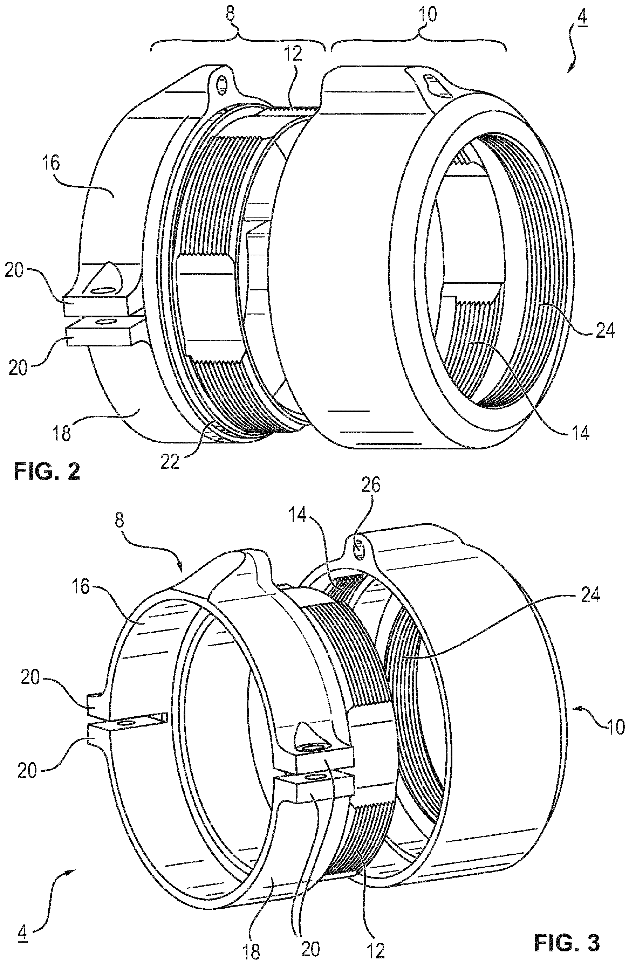

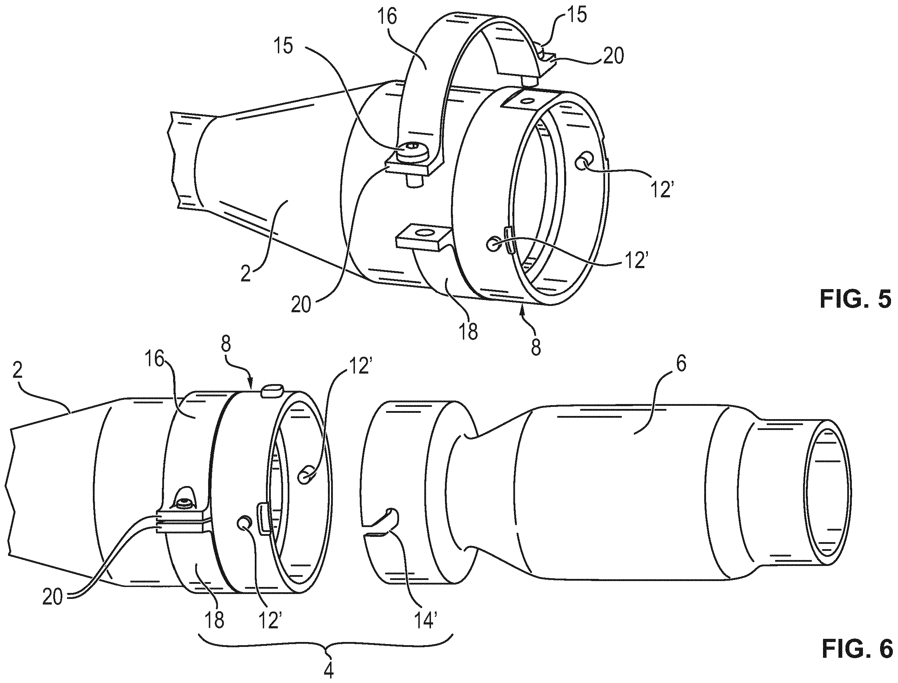

Die Fig. 1 zeigt ein Zielfernrohr 2 mit einer Adaptervorrichtung 4 zur Befestigung eines Vorsatzgeräts 6 (Fig. 6). Die Adaptervorrichtung 4 weist einen an dem Zielfernrohr 2 objektivseitig befestigten Klemmring 8 auf, welcher mit einem separaten Haltering 10 mechanisch koppelbar ist. Hierzu weist der Klemmring 8 eine Haltekontur 12 und der Haltering 10 eine korrespondierende Gegenkontur 14 (Fig. 2) auf.

In dem Ausführungsbeispiel der Fig. 1 ist sind die Konturen 12, 14 als Gewinde ausgeführt, so dass die mechanische Kopplung zwischen den Adapterteilen 8, 10 insbesondere als eine form- und/oder kraftschlüssige Gewindeverbindung realisiert ist.

Der Klemmring 8 weist zwei schellenartig gegeneinander verspannbare Ringhälften 16, 18 auf. Die Ringhälfte 18 ist hierbei einteilig, also einstückig oder monolithisch, mit der Haltekontur 12 ausgeführt. Die Ringhälften 16, 18 umgreifen hierbei das objektivseitige Tubusende des Zielfernrohrs 2, welches im verspannten oder montierten Zustand form- und kraftschlüssig von dem Klemmring 8 tangential und radial geklemmt ist. Die Ringhälften 16, 18 sind hierbei mittels zweier diametral gegenüberliegender Befestigungsschrauben 15 (Fig. 5) gegeneinander verspannbar. Die Ringhälften 16, 18 weisen hierbei jeweils zwei diametral gegenüberliegende Flanschbereiche 20 mit einer (Gewinde-)Bohrung auf.

Die Ringhälften 16, 18 beziehungsweise die Flächenpressung des Klemmrings 8 weisen hierbei eine Spann- oder Anlagefläche mit einer axialen Breite von weniger als 20 mm, insbesondere weniger als 17 mm, vorzugsweise etwa 15 mm, auf.

Die Haltekontur 12 ist vorzugsweise als ein Außengewinde des Klemmrings 8 und die Gegenkontur 14 als ein korrespondierendes Innengewinde des Halterings 10 ausgeführt. Vorzugsweise sind die Konturen oder Gewinde 12, 14 derart ausgeführt sind, dass sie über eine Drehbewegung, insbesondere mittels einer 45°-Drehbewegung, der Gegenkontur 12 beziehungsweise des Halterings 10 miteinander fügbar sind. Hierzu sind die Konturen 12, 14 als unterbrochene Rundgewinde ausgeführt. Geeigneterweise ist hierbei eine Feinzentrierung 22, am Klemmring 8 vorgesehen, welche als Passungsdurchmesser eine Fläche im Gewindespiel abfängt, so dass durch die Plananlage der Konturen und der Feinzentrierung eine Wiederholgenauigkeit von beispielsweise ± 0.05 mm gewährleistet ist.

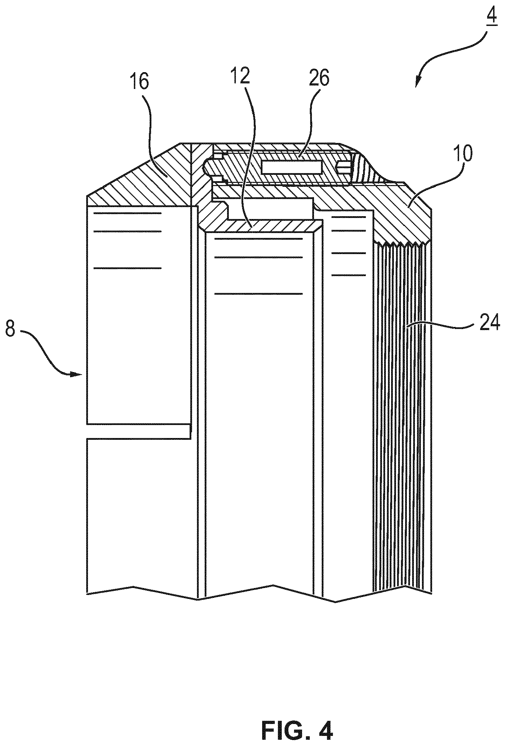

Nachfolgend ist anhand der Figuren 2 bis 4 ein zweites Ausführungsbeispiel der Adaptervorrichtung 4 näher erläutert. In dieser Ausführung ist die Adaptervorrichtung 4 insbesondere als ein Montageadapter ausgeführt, der einen an ein spezielles Vorsatzgerät angepassten Haltering 10 aufweist. Der Haltering 10 ist hierbei mit einem Innengewinde 24 versehen, welches in ein korrespondierendes Außengewinde des Vorsatzgeräts eindrehbar ist.

Die Adaptervorrichtung 4 der Figuren 2 bis 4 weist weiterhin ein einstellbares Verriegelungselement 26 auf, mittels welchem die Befestigung oder Arretierung, also die Rotationsposition der Adapterteile 8, 10 in der Montagestellung, festlegbar ist. In dieser Ausführungsform ist das Verriegelungselement 26 als ein Federdruckstück ausgebildet, welches in dem Haltering 10 integriert ist.

Die Figuren 5 und 6 zeigen ein nicht erfindungsgemäßes drittes Ausführungsbeispiel der Adaptervorrichtung 4. In dieser Ausgestaltung ist die Gegenkontur 14' als ein Teil des Vorsatzgeräts 6 ausgeführt. Die mechanische Kopplung oder Fügeverbindung der Adaptervorrichtung 4 ist hierbei nach Art einer Bajonett-Verbindung ausgeführt. Hierzu weist der Klemmring 8 zwei am Innenumfang radial nach innen ragende Stifte als Haltekontur 12 ` auf, wobei die Gegenkontur 14' als zwei radiale Schrägnuten des Vorsatzgeräts 6 ausgeführt sind.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen. In jedem Fall wird der Gegenstand der Erfindung durch die beigefügten Ansprüche definiert.

### Bezugszeichenliste

- 2: Zielfernrohr
- 4: Adaptervorrichtung
- 6: Vorsatzgerät
- 8: Klemmring
- 10: Haltering
- 12, 12': Haltekontur
- 14, 14': Gegenkontur
- 15: Befestigungsschrauben
- 16: Ringhälfte
- 18: Ringhälfte
- 20: Flanschbereich
- 22: Feinzentrierung
- 24: Innengewinde
- 26: Verriegelungselement

## Patentansprüche

1. Adaptervorrichtung (4) zur Befestigung eines Vorsatzgeräts (6) an einem Zielfernrohr (2), aufweisend einen an dem Zielfernrohr (2) befestigbaren Klemmring (8) und einen an dem Vorsatzgerät (6) befestigbaren Haltering (10),
- wobei der Klemmring (8) eine Haltekontur (12) zur lösbaren form- und/oder kraftschlüssigen Befestigung mit einer an dem Haltering (10) angeordneten Gegenkontur (14) aufweist,
- die Haltekontur (12) und die Gegenkontur (14) als eine Gewindeverbindung mit einem unterbrochenen Rundgewinde ausgeführt sind.

2. Adaptervorrichtung (4) nach Anspruch 1,
**dadurch gekennzeichnet,**
**dass** der Klemmring (8) zwei schellenartig gegeneinander verspannbare Ringhälften (16, 18) aufweist.

3. Adaptervorrichtung (4) nach Anspruch 2,
**dadurch gekennzeichnet,**
**dass** die Ringhälften (16, 18) mittels zweier diametral gegenüberliegender Befestigungsschrauben (15) gegeneinander verspannbar sind.

4. Adaptervorrichtung (4) nach Anspruch 2 oder 3,
**dadurch gekennzeichnet,**
**dass** die Ringhälften (16, 18) eine Spannfläche zur Halterung an dem Zielfernrohr (2) mit einer axialen Breite von weniger als 20 mm, insbesondere von etwa 15 mm, aufweisen.

5. Adaptervorrichtung (4) nach Anspruch 1 bis 4,
**dadurch gekennzeichnet,**
**dass** die Haltekontur (12) als ein Außengewinde und die Gegenkontur (14) als ein korrespondierendes Innengewinde ausgeführt sind.

6. Adaptervorrichtung (4) nach einem der Ansprüche 1 bis 5,
**dadurch gekennzeichnet,**
**dass** der Haltering (10) und/oder der Klemmring (8) ein einstellbares Verriegelungselement (26) aufweist.

## Claims

1. Adapter device (4) for fastening an attachment apparatus (6) to a telescopic sight (2), having a clamping ring (8) which is fastenable to the telescopic sight (2), and a holding ring (10) which is fastenable to the attachment apparatus (6),
- wherein the clamping ring (8) has a holding contour (12) for releasably fastening in a form-fitting and/or force-fitting manner to a mating contour (14) disposed on the holding ring (10), and
- the holding contour (12) and the mating contour (14) are embodied as a threaded connection with an interrupted round thread.

2. Adapter device (4) according to Claim 1, **characterized in that** the clamping ring (8) has two ring halves (16, 18) which are able to be mutually braced in the manner of clamping pieces.

3. Adapter device (4) according to Claim 2, **characterized in that** the ring halves (16, 18) are able to be mutually braced by means of two diametrically opposite fastening screws (15).

4. Adapter device (4) according to Claim 2 or 3, **characterized in that** the ring halves (16, 18) have a clamping face, having an axial width of less than 20 mm, in particular of approximately 15 mm, for mounting on the telescopic sight (2).

5. Adapter device (4) according to Claims 1 to 4, **characterized in that** the holding contour (12) is embodied as an external thread, and the mating contour (14) is embodied as a corresponding internal thread.

6. Adapter device (4) according to one of Claims 1 to 5, **characterized in that** the holding ring (10) and/or the clamping ring (8) have/has an adjustable locking element (26).

## Revendications

1. Dispositif adaptateur (4) pour la fixation d'un appareil accessoire (6) à une lunette de visée (2), présentant une bague de serrage (8) pouvant être fixée à la lunette de visée (2) et une bague de maintien (10) pouvant être fixée à l'appareil accessoire (6),
- la bague de serrage (8) présentant un contour de maintien (12) pour la fixation amovible par complémentarité de forme et/ou par force avec un contour opposé (14) agencé sur la bague de maintien (10),
- le contour de maintien (12) et le contour opposé (14) étant réalisés sous la forme d'une liaison filetée avec un filetage rond interrompu.

2. Dispositif adaptateur (4) selon la revendication 1, **caractérisé en ce que** la bague de serrage (8) présente deux moitiés de bague (16, 18) pouvant être serrées l'une contre l'autre à la manière d'un collier.

3. Dispositif adaptateur (4) selon la revendication 2, **caractérisé en ce que** les moitiés de bague (16, 18) peuvent être serrées l'une contre l'autre au moyen de deux vis de fixation (15) diamétralement opposées.

4. Dispositif adaptateur (4) selon la revendication 2 ou 3, **caractérisé en ce que** les moitiés de bague (16, 18) présentent une surface de serrage pour le maintien sur la lunette de visée (2) avec une largeur axiale inférieure à 20 mm, notamment d'environ 15 mm.

5. Dispositif adaptateur (4) selon les revendications 1 à 4, **caractérisé en ce que** le contour de maintien (12) est réalisé sous la forme d'un filetage extérieur et le contour opposé (14) sous la forme d'un filetage intérieur correspondant.

6. Dispositif adaptateur (4) selon l'une quelconque des revendications 1 à 5, **caractérisé en ce que** la bague de maintien (10) et/ou la bague de serrage (8) présentent un élément de verrouillage réglable (26).
